Europäisches Patentamt

European Patent Office

Office européen des brevets

(19)

(11) **EP 0 951 612 B1**

(12) **EUROPÄISCHE PATENTSCHRIFT**

(45) Veröffentlichungstag und Bekanntmachung des Hinweises auf die Patenterteilung:
**04.04.2001 Patentblatt 2001/14**

(21) Anmeldenummer: **97953845.1**

(22) Anmeldetag: **18.12.1997**

(51) Int Cl.[7]: **E21B 43/25**

(86) Internationale Anmeldenummer:
**PCT/EP97/07104**

(87) Internationale Veröffentlichungsnummer:
**WO 98/27314 (25.06.1998 Gazette 1998/25)**

(54) **VERFAHREN ZUR AUSTROCKNUNG VON IMMOBILES FORMATIONSWASSER ENTHALTENDEM GESTEIN IM EINZUGSRADIUS VON ERDGAS- UND GASSPEICHERBOHRUNGEN**

METHOD FOR DRYING OUT ROCK CONTAINING IMMOBILE FORMATION WATER WITHIN THE ENCROACHMENT AREA OF NATURAL GAS DEPOSITS AND GAS RESERVOIRS

PROCEDE D'ASSECHEMENT D'UNE ROCHE CONTENANT DE L'EAU DE FORMATION IMMOBILE DANS LE RAYON D'INVASION DE GISEMENTS DE GAZ NATUREL OU DE RESERVES DE GAZ

(84) Benannte Vertragsstaaten:
**DE GB NL**

(30) Priorität: **19.12.1996 DE 19653140**

(43) Veröffentlichungstag der Anmeldung:
**27.10.1999 Patentblatt 1999/43**

(73) Patentinhaber: **Wacker-Chemie GmbH
81737 München (DE)**

(72) Erfinder:
 • DEWENTER, Wendelin
  **D-34414 Warburg (DE)**
 • SEWE, Kai-Udo
  **D-49406 Barnstorf (DE)**
 • BURGER, Willibald
  **D-84489 Burghausen (DE)**
 • GECK, Michael
  **D-84489 Burghausen (DE)**
 • ESTERBAUER, Ludwig
  **D-84489 Burghausen (DE)**

(74) Vertreter: **Fritz, Helmut, Dr. et al
Wacker-Chemie GmbH,
Zentralabteilung Patente,
Marken und Lizenzen,
Hanns-Seidel-Platz 4
81737 München (DE)**

(56) Entgegenhaltungen:
 **EP-A- 0 707 134        GB-A- 1 021 528
 US-A- 3 653 442         US-A- 4 074 536
 US-A- 5 168 930         US-A- 5 346 013**

 • **DATABASE WPI Section Ch, Week 8206, Derwent Publications Ltd., London, GB; Class E11, AN 82-11187E, XP002062448 & SU 821 686 A (SIBE OIL IND RES) 15 April 1981**
 • **DATABASE WPI Section Ch, Week 9311 Derwent Publications Ltd., London, GB; Class A97, AN 93-091996 XP002062449 & SU 1 724 854 A (UNIV KUBAN) , 7.April 1992**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Austrocknung von immobiles Formationswasser enthaltendem Gestein im Einzugsradius von Erdgas- und Gasspeicherbohrungen, wobei wasserabweisender Wirkstoff in dispergierter Form das Wasser enthaltende Gestein hydrophobiert.

In der Umgebung von Förderbohrungen in Erdgaslagerstätten behindert Formationswasser in den Porenräumen des Gesteins den Durchfluß von Gas zur Förderbohrung. Wenn das Formationswasser stark salzhaltig ist, bewirkt das Verdampfen von Wasser eine Überschreitung der Löslichkeitsgrenze, insbesondere chloridische Salze kristallisieren aus. Da über Kapillarkräfte ständig Salzwasser in die Porenräume gezogen wird, wachsen die Salzkristalle stetig, bis die Fließkanäle bis zur Undurchlässigkeit von Erdgas verschlossen sind.

Salzablagerungen finden nicht nur in den Porenräumen statt, sondern bilden sich auch auf Bohrlochfutterrohren und anderen Rohren, sowie auf Lager- und Weiterverarbeitungseinrichtungen, wie Leitungen, Ventilen, Heizschlangen und -rohren und Separatoren, die mit der Handhabung des geförderten Gases und des abgetrennten Formationswassers zu tun haben. Wenn sich eine Ablagerung bildet, nimmt die Fördergeschwindigkeit ab und schließlich kommt der ganze Betrieb zum Stillstand. Weiterhin ist der Wärmeübergang vermindert.

Das gängige Verfahren, die Produktivität von Erdgasbohrungen zu verbessern, besteht in der hydraulischen Erzeugung und der Stabilisierung von Rissen in der Umgebung des Bohrloches. Die dadurch erzeugten zusätzlichen Drainageflächen und die hohe Gas-Flußdichte in den Rissen führt zu einer erhöhten Förderrate der Bohrung. Dieses Verfahren ist jedoch sehr teuer. Die Rißbildung kann nur sehr begrenzt kontrolliert werden.

Die Salzablagerungen, insbesondere chloridische Salze können durch Spülungen mit Süßwasser beseitigt werden. Da sich die Salzablagerungen immer wieder neu bilden, müssen diese Spülungen regelmäßig durchgeführt werden, wodurch häufige Produktionsausfälle entstehen.

Ein Verfahren zur Entfernung von Salzablagerungen in Bohrungen ist in der US-A-5,051,197 beschrieben. Dort werden die Bohrungen mit einer wäßrige Zusammensetzung aus Aminopolycarbonsäure und wasserlöslichem Organosilan behandelt. Wasserlösliche Organosilane besitzen aber meist eine hohe Flüchtigkeit und einen niedrigen Flammpunkt, hydrolysieren rasch und spalten toxische und leicht entflammbare Produkte in Gegenwart von Wasser ab. So bilden Chlorsilane HCl, Methoxysilane Methanol und Ethoxysilane Ethanol. Deshalb sind diese Zusammensetzungen nur kurzzeitig haltbar und schlecht zu handhaben. Zudem wird hier ein Verfahren zur Entfernung von Salzablagerungen beschrieben, und nicht ein Verfahren zur Verhinderung von Salzablagerungen.

Ein Verfahren zur Verhinderung von Salzablagerungen in Bohrungen ist in der US-A-3,682,831 beschrieben. Dort werden die Bohrungen mit wasserlöslichen Glykol-Silicon-Copolymeren behandelt, die sehr hydrolyseempfindliche SiOC-Bindungen enthalten. Die Wirkung dieses Verfahrens ist jedoch zu schlecht.

In US-A-3,653,442 ist ein Verfahren zur Entfernung von Wasser mittels micellarer Dispersionen beschrieben, wodurch die Erhöhung des Gas- oder Ölflusses durch Entfernen eines Wasserblocks erreicht wird.

Database WPI, week 9311, AN-93-091996 und SU-A-1 724 854 beschreiben ein Dichtungsmaterial für Erdgas und Erdölbohrungen beschrieben, welches mobiles zufließendes Wasser stoppen soll.

US-A-4,074,536 beschreibt ein Verfahren zur Hydrophobierung von Gesteinsformacionen mit Crganosiliciumverbindungen im Hinblick auf eine Vorfertigung des Gesteins und eine Verhinderung der Auflösung des Gesteins in Gegenwart von Wasser.

Es bestand daher die Aufgabe, ein Mittel bereitzustellen, das immobiles Formationswasser im Gestein austrocknet und das Salzablagerungen in den Porenräumen des Gesteins in der Umgebung von Erdgasförderbohrungen in Erdgaslagerstätten dauerhaft verhindert.

Die Erfindung betrifft ein Verfahren zur Austrocknung von immobiles Formationswasser enthaltendem Gestein im Einzugsradius von Erdgas- und Gasspeicherbohrungen, die weniger als 50 1 Wasser pro 1000 m$^3$ (Vn) gefördertes Erdgas liefern,
bei dem eine Dispersion, enthaltend die Komponenten

   A) Organosiliciumverbindung als wasserabweisender Wirkstoff,
   B) Wasser als Dispersionsmittel und gegebenenfalls
   C) Dispergens

   das Wasser enthaltende Gestein hydrophobiert.

Die erfindungsgemäß eingesetzten wasserabweisenden Wirkstoffe (A) sind im Formationswasser gut verteilbar, können sich also auf der gesamten Gesteinsoberfläche homogen verteilen und dort dann brechen. Dadurch bedecken die wasserabweisenden Wirkstoffe (A) in sehr dünner Schicht die Gesteinsoberfläche.

Wird nun Erdgas gefördert, bewirkt die Absenkung des Lagerstättendrucks die zusätzliche Aufnahme von Wasser im Erdgas. Da in der hydrophobierten Gesteinszone in der Umgebung der Bohrung die kapillare Saugwirkung für Wasser stark herabgesetzt wird, trocknet der behandelte Bereich allmählich durch Verdampfung des Wassers aus.

Die Austrocknung des Gesteins bewirkt eine Verbesserung der Gasdurchlässigkeit, da nunmehr Gas ohne Behinderung durch Wasser den ganzen Porenraum durchströmen kann. Da bei gleichem Kapillardruck die Wassersättigung in niedrigpermeablem Gestein mit engen Kapillaren größer ist als in höherpermeablem Gestein, ist das Verfahren für Lagerstätten mit niedriger Permeabilität besonders geeignet. Zudem führt die Anwendung bei heterogenem Lagerstättengestein mit unterschiedlicher Permeabilität zu einer Homogenisierung des Fließprofils in Bohrlochnähe.

Durch die Austrocknung des Gesteins in der Umgebung der Bohrung werden das Verstopfen der Kapillaren des Gesteins, sowie Salzablagerungen auf Einrichtungen zur Förderung, Lagerung und Weiterverarbeitung vermieden.

Gegenüber der hydraulischen Erzeugung von Rissen in der Umgebung des Bohrloches weist das Verfahren deutlich geringere Kosten auf. Das Verfahren benötigt geringere Injektionsdrücke und führt zu einem erheblich geringeren Risiko, die Bohrung zu schädigen. Durch Rißbildung behandelte Bohrungen können ergänzend mit dem erfindungsgemäßen Verfahren behandelt werden. Auch Bohrungen, bei denen die Ausrüstung nicht für die hydraulische Erzeugung von Rissen geeignet ist, können mit dem erfindungsgemäßen Verfahren behandelt werden.

Die Dispersion weist chemische Inaktivität gegenüber den in den Lagerstätten vorhandenen Gesteinen, Salzlösungen, dem Erdgas und den Fördereinrichtungen auf.

Der wasserabweisende Wirkstoff (A) ist vorzugsweise zu höchstens 1 Gew.-%, insbesondere zu höchstens 0,1 Gew.-% in Wasser bei 20°C löslich.

Organosiliciumverbindungen sind temperaturstabil bei häufig in Lagerstätten vorherrschenden Temperaturen von 130°C und wesentlich darüber. Die hydrophobierende Wirkung auf die Gesteinsoberfläche bleibt lange erhalten.

Vorzugsweise ist die Organosiliciumverbindung (A) aus Einheiten der allgemeinen Formeln (I) bis (VII)

$$R_3SiO_{1/2} \hspace{8cm} (I),$$

$$R_2SiO \hspace{8cm} (II),$$

$$RSiO_{3/2} \hspace{8cm} (III),$$

$$SiO_{4/2} \hspace{8cm} (IV),$$

$$R_2(R'O)SiO_{1/2} \hspace{8cm} (V),$$

$$R(R'O)SiO \hspace{8cm} (VI),$$

$$R'OSiO_{3/2} \hspace{8cm} (VII),$$

aufgebaut, worin

**R** einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 18 Kohlenstoffatomen,

**R'** einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 30 Kohlenstoffatomen und Wasserstoffatome bedeuten.

Beispiele für Kohlenwasserstoffreste **R** und **R'** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl-, Allyl- und der 5-Hexen-1-ylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Reste **R** und **R'** sind Cyanalkylreste, wie der β-Cyanethylrest, und mit Fluor, Chlor oder Bromatomen halogenierte Kohlenwasserstoffreste, beispielsweise Halogenalkylreste, wie der 3,3,3-Trifluor-n-propylrest, der 2,2,2,2',2',2'-Hexafluorisopropylrest, der 8-Heptafluorisopropylrest, und Halogenarylreste, wie der o-, mund p-Chlorphenylrest.

Vorzugsweise sind mindestens 90 Mol-% der Reste **R** Methyl-, Ethyl- oder Phenylreste, insbesondere Methylreste.

Beispiele für die durch Polyoxyalkylengruppen substituierten Reste **R** und **R'** sind die Reste der allgemeinen Formel (VIII)

$$-R^1-[O(CR^2{}_2)_c]_dOR^3 \qquad\qquad (VIII),$$

in der

**R¹** einen zweiwertigen $C_1$ - bis $C_6$-Alkylenrest,

**R²** Wasserstoffatome, oder einwertige $C_1$- bis $C_6$-Kohlenwasserstoffreste,

**R³** Wasserstoffatome, einwertige $C_1$- bis $C_6$-Kohlenwasserstoffreste, $C_1$-$C_8$-Acylreste, Ethyletherreste oder Silylreste,

**c** die Werte 0, 1, 2, 3, 4 oder 5, vorzugsweise 2 oder 3 und

**d** ganzzahlige Werte von 1 bis 100, vorzugsweise 1 bis 10 bedeuten.

Beispiele für die zweiwertigen Reste **R¹** sind gesättigte geradoder verzweigtkettige oder cyclische Alkylenreste wie der Methylen- und Ethylenrest sowie Propylen-, Butylen-, Pentylen-, Hexylen-, 2-Methylpropylen-, Cyclohexylenreste, oder ungesättigte Alkylenreste wie der Propenylen- und Hexenylenrest.

Beispiele für die einwertigen Reste **R²** und **R³** sind bei den vorstehenden Beispielen für **R** und **R'** aufgeführt. Beispiele für Acylreste sind der Acetylrest, für Ethyletherreste der Tetrahydropyranylrest und für Silylreste der Trimethylsilylrest.

Weitere Beispiele für die durch Polyoxyalkylengruppen substituierten Reste **R** und **R'** sind die Reste der allgemeinen Formel (IX)

$$-C-[O(CR^2{}_2)_c]_dOR^2$$

$$HC-[O(CR^2{}_2)_c]_dOR^2 \qquad\qquad (IX),$$

worin **R²**, **c** und **d** die vorstehend für die allgemeine Formel (VIII) angegebenen Bedeutungen aufweisen.

Vorzugsweise weisen höchstens 20 Mol-% der Einheiten der Organosiliciumverbindung (A) die allgemeinen Formeln (V) bis (VII) auf.

Vorzugsweise enthält die Organosiliciumverbindung (A) mindestens 50 Gew.-%, insbesondere mindestens 80 Gew.-% Organopolysiloxane (A1), welche zu mindestens 90 Mol-%, insbesondere 95 Mol-% aus Einheiten der allgemeinen Formel (II) bestehen. Weiterhin ist bevorzugt, daß Organopolysiloxan (A1) eine durchschnittliche Viskosität von 5 bis 2 000 000 mPa.s, insbesondere von 350 bis 60 000 mPa.s bei 25°C aufweist.

Vorzugsweise enthält die Organosiliciumverbindung (A) mindestens 2 Gew.-%, insbesondere mindestens 5 Gew.-% und vorzugsweise höchstens 70 Gew.-% Organopolysiloxanharze (A2), welche zu mindestens 90 Mol-%, insbesondere 95 Mol-% aus Einheiten der allgemeinen Formeln (I), (IV) und (V) bestehen. Beispielsweise können die Organopolysiloxanharze (A2) bei Raumtemperatur fest sein und 0,25 bis 1,25 Einheiten der allgemeinen Formel (I) pro Einheit der allgemeinen Formel (IV) aufweisen. Diese bevorzugten Organopolysiloxanharze (A2) können, bedingt durch ihre Herstellung, bis zu insgesamt 5 Gew.-% Si-gebundene Alkoxyreste oder Hydroxylgruppen enthalten. Die Organopolysiloxanharze (A2) sind in der Regel mit Polydimethylsiloxanen nicht vollständig mischbar.

Obwohl in den allgemeinen Formeln (I) bis (III) nicht aufgeführt, kann ein Teil der Reste **R** durch direkt an Siliciumatome gebundene Wasserstoffatome ersetzt sein. Dies ist aber nicht bevorzugt.

Obwohl des weiteren in den allgemeinen Formeln (I) bis (III) nicht aufgeführt, können auch nicht wasserlösliche Organosilane als Organosiliciumverbindungen (A) eingesetzt werden.

Aber auch vernetzende Organosiliciumverbindungen (A) sind geeignet. So können beispielsweise auch wäßrige Siloxandispersionen, die vernetzende Siloxane enthalten, eingesetzt werden. Aber auch Organosiliciumverbindungen, die in dem Dispersionsmittel (B) ohne Dispergentien (C) spontan eine Dispersion bilden, sog. selbstdispergierende Organosiliciumverbindungen insbesondere Organopolysiloxane, sind geeignet.

Als Dispergentien (C) eignen sich eine Vielzahl von Wirkstoffen, die man zweckmäßig in grenzflächenaktive Dispergentien, wie nichtionische, anionische, kationische und ampholytische, in zum Teil grenzflächenaktive Dispergentien, wie hochmolekulare Stoffe und Naturprodukte, sowie in meist geringe Grenzflächenaktivität aufweisende Dispergentien, wie anorganische und spezielle Dispergierhilfsmittel, einteilt. Eine Übersicht ist in Ullmanns Encyklopädie der technischen Chemie, Verlag Chemie Weinheim, 4. Auflage 1975, Bd. 10, S. 449 - 473 genannt.

Vorzugsweise wird das Dispergens (C) ausgewählt unter den nachstehenden Dispergierhilfsmitteln:

1. Alkylsulfate, beispielsweise mit einer Kettenlänge von 8-18 C-Atomen, Alkylethersulfate mit 8 - 18 C-Atomen im hydrophoben Rest und 1 - 40 Ethylenoxid(EO)- bzw. Propylenoxid (PO)-Einheiten.

2. Sulfonate, z.B. Alkylsulfonate mit 8 - 18 C-Atomen, Alkylarylsulfonate mit 8 - 18 C-Atomen, Ester und Halbester der Sulfobernsteinsäure mit einwertigen Alkoholen oder Alkylphenolen mit 4 - 15 C-Atomen; gegebenenfalls können diese Alkohole oder Alkylphenole auch mit 1 - 40 EO-Einheiten ethoxyliert sein.

3. Alkali- und Ammoniumsalze von Carbonsäuren und Poly(alkylenglycol)ether-Carbonsäuren mit 8 - 20 C-Atomen im Alkyl-, Aryl-, Alkaryl- oder Aralkylrest und 1 - 40 EO- bzw. PO-Einheiten.

4. Phosphorsäureteilester und deren Alkali- und Ammoniumsalze, z.B. Alkyl- und Alkarylphosphate mit 8 - 20 C-Atomen im organischen Rest, Alkylether- bzw. Alkaryletherphosphate mit 8 - 20 C-Atomen im Alkyl- bzw. Alkarylrest und 1 - 40 EO-Einheiten.

5. Alkylpolyglycolether, vorzugsweise solche mit 2 - 40 EO-Einheiten und Alkylresten von 4 - 20 C-Atomen.

6. Alkylarylpolyglycolether mit 2 - 40 EO-Einheiten und 8 -20 C-Atomen in den Alkyl- und Arylresten.

7. Ethylenoxid/Propylenoxid(EO/PO)-Blockcopolymere mit 8 - 40 EO- bzw. PO-Einheiten.

8. Fettsäurepolyglycolester mit 6 - 24 C-Atomen und 2 - 40 EO-Einheiten.

9. Fettsäureester von Glycerin, Sorbit und Pentaerythrit.

10. Alkylpolyglykoside der allgemeinen Formel $R''\text{-}O\text{-}Z_o$, worin $R''$ einen linearen oder verzweigten, gesättigten oder ungesättigten Alkylrest mit im Mittel 8 - 24 C-Atomen und $Z_o$ einen Oligoglykosidrest mit im Mittel $o = 1 - 10$ Hexose- oder Pentoseeinheiten oder Gemischen davon bedeuten.

11. Polare Gruppen enthaltende lineare Organopolysiloxane mit Alkoxygruppen und bis zu 24 C-Atomen und/oder bis zu 40 EO-und/oder PO-Gruppen.

12. Salze von primären, sekundären und tertiären Fettaminen mit 8 - 24 C-Atomen mit Essigsäure, Schwefelsäure, Salzsäure und Phosphorsäuren.

13. Quarternäre Alkyl- und Alkylbenzylammoniumsalze, deren Alkylgruppen 1 - 24 C-Atome besitzen, insbesondere die Halogenide, Sulfate, Phosphate, Acetate und Hydroxide.

14. Alkylpyridinium-, Alkylimidazolinium- und Alkyloxazoliniumsalze, deren Alkylkette bis zu 18 C-Atome besitzt, speziell in Form ihrer Halogenide, Sulfate, Phosphate und Acetate.

15. hochmolekulare Stoffe wie Polymerisate, z.B. Polyvinylalkohol und Mischpolymerisate, wie Vinylacetat/Ethylen-Polymerisate.

16. Naturstoffe und ihre Abwandlungsprodukte, wie Polysaccharide oder Cellulose und Cellulosederivate, wie Celluloseether.

Es kann ein Dispergens, es können auch Gemische mehrerer Dispergentien eingesetzt werden.

Besonders bevorzugt als Dispergentien sind die oben unter 1, 2, 3, 5, 6, 7 und 8, 12, 13, 15, 16 aufgeführten Dispergentien, insbesondere die unter 2, 3, 5, 6 und 13 aufgeführten Dispergentien.

Vorzugsweise werden auf 100 Gewichtsteile wasserabweisenden Wirkstoffs (A) 2,5 bis 250, vorzugsweise 5 bis 150, insbesondere 10 bis 70 Gewichtsteile Dispergens (B) eingesetzt.

Als Zusatzstoffe (D) kann die Dispersion beispielsweise Füllstoffe, Fungizide, Bakterizide, Algicide, Biocide, Geruchsstoffe, Korrosionsinhibitoren, native Öle, Verdickungsmittel, Netzmittel, Cotenside und organische Lösungsmittel enthalten.

Der Anteil von Füllstoff beträgt vorzugsweise bis zu 20 Gewichtsteile, insbesondere 2 bis 8 Gewichtsteile pro 100 Gewichtsteile wasserabweisender Wirkstoff (A).

Die Herstellung der Dispersionen ist dem Fachmann bekannt.

Die mittlere Teilchengröße der Dispersion beträgt vorzugsweise höchstens 1000 μm, insbesondere 5 nm bis 250 μm.

Die Zusammensetzungen, Teilchengrößen und Konzentrationen der Dispersionen können an die in den Lagerstätten vorherrschenden Gesteinsarten und Bedingungen, wie Temperatur und Salzgehalt angepaßt werden, so daß sie auch unter extremen Bedingungen injizierbar sind. Die Teilchengröße wird vorzugsweise so gewählt, daß die Porengröße des Gesteins nicht erreicht wird. Durch den hohen Anteil an den Komponenten wasserabweisende Stoffe (A), Dispersionsmittel (B), Dispergens (C) und gegebenenfalls Zusatzstoffe (D) in der Dispersion kann das in das Gestein eingebrachte Dispersionsmittel klein gehalten werden. Die Konzentration der Dispersion kann an Gesteinseigenschaften, wie Durchlässigkeit und Eindringtiefe angepaßt werden. Bei hohen Durchlässigkeiten können kleinere Mengen an gröberdispersen Dispersionen mit höheren Gehalten an den Komponenten wasserabweisende Stoffe (A), Dispersionsmittel (B), Dispergens (C) und gegebenenfalls Zusatzstoffen (D) eingesetzt werden. Bei geringen Gesteinsdurchlässigkeiten werden größere Mengen an feindispersen Dispersionen mit geringerer Konzentration eingesetzt.

Geeignet sind auch Substanzen, welche erst unter Anwendungsbedingungen einen wasserabweisenden Stoff (A) in einem Dispersionsmittel (B) bilden, in dem sie vorher löslich waren. Als Beispiele hierzu sind nichtionische Tenside oder glycolfunktionelle Siliconöle zu nennen, die in polaren Dispersionsmitteln wie Wasser löslich sind, aber dann bei höheren Temperaturen einen Trübungspunkt erreichen und wasserabweisend werden.

Das im Erdgas enthaltene Wasser ist hauptsächlich Kondensationswasser. Vorzugsweise liefern die mit dem vorliegenden Verfahren behandelten Erdgas- und Gasspeicherbohrungen höchstens 40, insbesondere höchstens 20 1 Wasser pro 1000 m$^3$ (Vn) gefördertes Erdgas.

Im den nachfolgenden Beispielen, falls jeweils nicht anders angegeben,

a) sind alle Mengenangaben auf das Gewicht bezogen;
b) sind alle Drücke 0,1013 MPa (abs.);
c) sind alle Temperaturen 20° C;
d) wurden nachstehende Abkürzungen verwendet

dem.    demineralisiert
PDMS  Polydimethylsiloxan
Me      Methylrest;
Vn      Volumen bei Normbedingungen 0°C und 0,1013 MPa (abs.)

e) wurde die Aminzahl als Anzahl der ml 1-n-HCl bezeichnet, die zum Neutralisieren von 1 g Organopolysiloxan erforderlich sind.

**Beispiele**

Die nachstehenden Beispiele wurden an Probenkernen des mittleren Buntsandsteins des Gasfeldes in Barrien; Norddeutschland, ausgeführt. Die zylinderförmigen Probenkerne wiesen Längen und Durchmesser von jeweils 3 cm auf.

Beispiele 1 bis 5

Mit den Probenkernen wurden nachstehende Maßnahmen durchgeführt:

a) Die Probenkerne wurden bei 90°C über Nacht getrocknet.
b) Die trockenen Probenkerne wurden in einen vakuumfesten Behälter gestellt und der Behälter wurde evakuiert. Bei erreichtem Vakuum wurde der Behälter von der Vakuumpumpe durch Schließen eines Hahnes getrennt und dem. Wasser über einen zweiten Anschluß in den Behälter gesogen. Nachdem die Probenkerne vollständig im dem. Wasser eingetaucht waren wurde der Behälter belüftet. Die Probenkerne wurden zur Bestimmung von $m_v$ gewogen.
c) Die Probenkerne wurden bei 90°C über Nacht getrocknet und danach zur Bestimmung von $m_1$ gewogen.
d) Die trockenen Probenkerne wurden in jeweils einen saugfähigen Filterpapierstreifen der Breite 7 cm und Länge 19,2 cm derart eingerollt, daß der Kern zweifach umwickelt war und das Papier an einer Seite ca. 4 cm überstand. Das Filterpapier wurde durch einen elastischen Latexschlauch an die Mantelfläche angepreßt. In wasserdampfgesättigter Umgebung wurde das überstehende Papier in dem. Wasser gestellt, daß das Ende des Papiers in das Wasser eintauchte, der Kern sich aber oberhalb der Wasseroberfläche befand. Nach sieben Stunden wurde der Kern ausgewickelt und zur Bestimmung von $m_{F1}$ gewogen.
e) Nach der Gleichung

$$Sw\,(sp)_{ref} = \frac{m_{F1} - m_1}{m_v - m_1}$$

wurde der Referenzwert für dem. Wasser der spontanen Imbibition **Sw(sp)$_{ref}$** berechnet. Die spontane Imbibition beschreibt die Verdrängung der nichtbenetzenden Phase durch die benetzende Phase.

f) Die Probenkerne wurden bei 90°C über Nacht getrocknet.

g) Analog Maßnahme b) wurden die Probenkerne mit Organopolysiloxandispersion getränkt, welche Organopolysiloxane (A) als hydrophobierenden Wirkstoff in 10 %iger Konzentration enthielten. Zur Beseitigung eines Dispersionsüberschusses wurden die Kerne mit Stickstoff ausgeblasen.

h) Die Probenkerne wurden 17 h bei 90°C getrocknet und zur Bestimmung von $m_2$ gewogen.

i) Analog Maßnahme d) wurden die trockenen Probenkerne in Filterpapierstreifen gewickelt und in dem. Wasser gestellt. Nach sieben Stunden wurde der Kern ausgewickelt und zur Bestimmung von $m_{F2}$ gewogen.

j) Nach der Gleichung

$$Sw(sp)_1 = \frac{m_{F2} - m_2}{m_v - m_1}$$

wurde die spontane Imbibition $\mathbf{Sw(sp)_1}$ nach Behandlung der Kerne mit Dispersion berechnet.

k) Die Probenkerne wurden bei 90°C erneut getrocknet. Die Maßnahmen i) und j) wurden erneut durchgeführt. Der Vorgang wurde mehrfach wiederholt.

Die nachstehenden 5 Organopolysiloxandispersionen wurden in Beispiel 1 bis 5 untersucht:

## Tabelle I

| Dispersion für Beispiel | FG* in % | Wirkstoff | Emulgiersystem/Cosolvent |
|---|---|---|---|
| 1 | 39 | 35 % einesTrimethylsilyl- endgestopperten PDMS mit einer Viskosität von 12500 mPa s | 4 % Isotridecylpolyglycolether mit 10 EO-Einheiten Kathon als Konservierungsmittel |
| 2 | 100 | Silicon-Micro-Emulsionskonzentrat, hergestellt nach nachstehendem Verfahren:<br>Unter Rühren werden zu einem Gemisch aus 0,2 g KOH in 4 g Methanol und 500 g eines Hydroxyl-endgestopperten Dimethylpolysiloxans mit einem durchschnittlichen Molekulargewicht von etwa 4000 g/Mol 150 g N-(2-Aminoethyl)-3-aminopropyltrimethoxysilan gegeben und das so erhaltene Gemisch 6 Stunden zum Sieden unter Rückfluß erwärmt; dann wird auf 30°C gekühlt und mit 2,5 ml 10%iger Salzsäure vermischt. Durch Erwärmen auf bis zu 140°C wird schließlich das Methanol abdestilliert und das so erhaltene Organopolysiloxan von KCl durc Filtrieren befreit. Das Organopolysiloxan enthält 2,9% basischen Stickstoff, bezogen auf sein Gewicht.<br>40 g dieses Organopolysiloxans mit basischem Stickstoff werden mit 5 g Eisessig, 80 g des Organopolysiloxans der Summenformel $CH_3Si(OC_2H_5)_{0,8} O_{1,1}$ und dem durchschnittlichen Molekulargewicht von 600 g/Mol und 10 g i-Octyltrimethoxysilan vermischt und auf 90°C erwärmt, wobei sich eine klare Mischung bildet. | |
| 3 | 53 | 40% i-Octyltriethoxysilan<br>5% eines Organopolysiloxans der Summenformel $CH_3 Si(OC_2H_5)_{0,8}O_{1,1}$ mit einem durchschnittlichen Molekulargewicht von etwa 650 g/Mol und einer Viskosität von etwa 20 mPa.s<br>5% eines Kondensationsprodukts aus einem in den endständigen Einheiten je eine Si-gebundene Hydroxylgruppe aufweisenden a,w-Dihydroxy-methylpolysiloxans und N(-2-Aminoethyl)-3-aminopropyltrimethoxysilan in Gegenwart von KOH mit einer Aminzahl von etwa 0,3, einer Viskosität von etwa 1500 mPa.s bei 25°C und einem Restmethoxygehalt von weniger als 5 Mol-%, bezogen auf die anfangs im N(-2-Aminoethyl)-3-aminopropyltrimethoxysilan vorhandenen Methoxygruppen | 2,7% Glukopon®225 von Henkel KGaA, Düsseldorf, ein Fettalkohol C8-C10 Glykosid in wässriger Lösung<br><br>0,3% Genamin® 200 von Hoechst AG, Frankfurt, ein Umsetzungsprodukt aus Stearylamin und Ethylenoxid |

| Dispersion für Beispiel | FG* in % | 0,06 | Emulgiersystem/Cosolvent |
|---|---|---|---|
| 4 | 50 | 33 % eines aminofunktionellen Siliconöls der Formel x[1], wobei die Aminzahl 0,15, die Viskosität 5000 mPa.s und R = OH beträgt | 5 % Diethylenglycolmonobutylether<br>11 % Isotridecylpolyglycolether mit 5 EO-Einheiten<br> 1 % Fettalkoholpolyglycolether mit einer gesättigten Alkylgruppe ($C_{16}$ - $C_{18}$) und 25 EO-Einheiten<br>Benzalkylammoniumchlorid als Konservierungsmittel |
| 5 | 39 | 30 Gew.% eines Trimethylsilyl-endgestopperten PDMS mit einer Viskosität von 35 mPa.s<br>30 Gew.% eines endgestopperten PDM mit einer Viskosität von 150 mPa.s<br>40 Gew.% eines Harzes mit einem Verhältnis an $Me_3SiO_{1/2}$ / $SiO_{4/2}$ von 0,65 und einem OH-Gehalt von etwa 0,3 Gew.% und $OC_2H_5$-Gehalt von etwa 2,0 Gew.% | 8,2 Gew.% Hexadecyltrimethylammoniumchlorid<br>0,8 Gew.% Isotridecylpolyglycolether mit 10 EO-Einheiten<br><br>Formaldehyd als Konservierungsmittel |

\* Festgehalt

EO-Einheit = $-(CH_2-CH_2-O)-$

[1] Formel x: $RSiMe_2O \, [SiMe_2O]_m \, [SiMeR'O]_n \, SiMe_2R$

wobei R' = $(CH_2)_3 \, NH-CH_2-CH_2-NH_2$

EP 0 951 612 B1

Die spontane Imbibition **Sw(sp)$_1$** nimmt bei den mit Organopolysiloxandispersion behandelten Kernen nach 1 bis 2 Tagen stark ab, da durch die Hydrophobierung der Kerne die kapillare Saugwirkung für Wasser stark herabgesetzt wird.

In nachstehender Tabelle II sind die Werte für die spontane Imbibition **Sw(sp)$_1$** nach verschieden langen Trockenzeiten als Summe der Trockenzeiten bei Maßnahmen h) und k) im Vergleich zur Referenz **Sw(sp)$_{ref}$** angegeben.

Tabelle II

| Spontane Wasserimbibition $S_w$(sp) nach Gesamttrockenzeit [Tage] | | | | | | | |
|---|---|---|---|---|---|---|---|
| Beispiel | $S_w$(sp) | $S_w$(sp) 1 | | | | | |
| | ref | 1 | 2 | 5 | 10 | 13 | 17 |
| 1 | 0,64 | 0,06 | -- | | | | |
| 2 | 0,67 | 0,07 | -- | | | | |
| 3 | 0,58 | 0,05 | 0,04 | 0,06 | -- | | |
| 4 | 0,71 | 0,69 | 0,07 | 0,03 | -- | | |
| 5 | 0,65 | 0,36 | 0,3 | 0,22 | 0,14 | 0,07 | 0,04 |

Beispiel 6

Die spontane Imbibition **Sw(sp)$_{ref}$** eines Probenkerns wurde analog Beispiel 1 durch die Maßnahmen a) bis f) ermittelt. Danach wurden die nachstehenden Maßnahmen durchgeführt:

l) Der Probenkern wurde analog Maßnahme b) mit Salzwasser getränkt. Das Salzwasser entspricht in etwa im Salzgehalt dem Formationswasser und enthält pro Liter 28,5 g NaCl, 18.5 g CaCl$_2$, 1,6 g MgCl$_2$ und 1,4 g KCl, insgesamt 5 % Salzgehalt.

m) Der mit Salzwasser getränkte Probenkern wurde bei 140°C mit der Organopolysiloxandispersion aus Beispiel 5 mit einer Rate von 10 ml/h bis zur Druckkonstanz geflutet. Etwa 3 bis 4 Porenvolumina Organopolysiloxandispersion wurden dabei eingesetzt.

n) Der Probenkern wurde bei 140°C 3 Tage aufbewahrt.

o) Die Organopolysiloxandispersion wurde aus dem Probenkern mit Salzwasser ausgeflutet. Das Salzwasser wurde anschließend mit Stickstoff verdrängt.

p) Die Probenkerne wurden durch langsame Druckabsenkung von 0,44 auf 0,1 MPa in 6 h und anschließendes 17-stündiges Aufbewahren bei 90°C getrocknet und zur Bestimmung von **m$_3$** gewogen.

q) Analog Maßnahme d) wurden die trockenen Probenkerne in Filterpapierstreifen gewickelt und Salzwasser gestellt. Nach sieben Stunden wurde der Kern ausgewickelt und zur Bestimmung von **m$_{F3}$** gewogen.

r) Nach der Gleichung

$$Sw(sp)_2 = \frac{m_{F3} - m_3}{m_v - m_1}$$

wurde die spontane Imbibition **Sw(sp)$_2$** berechnet.

s) Die Probenkerne wurden 17 h bei 90°C erneut getrocknet. Die Maßnahmen q) und r) wurden erneut durchgeführt. Der Vorgang wurde mehrfach wiederholt.

In nachstehender Tabelle III sind die Werte für die spontane Imbibition **Sw(sp)$_2$** nach verschieden langen Trockenzeiten als Summe der Trockenzeiten bei Maßnahmen p) und s) im Vergleich zur Referenz **Sw(sp)$_{ref}$** angegeben.

Tabelle III

| Spontane Imbibition $S_w$(sp) nach Gesamttrockenzeit [Tage] | | |
|---|---|---|
| $S_w$(sp) ref | Sw(sp) 2 | |
| | 2 | 17 |

Tabelle III   (fortgesetzt)

| Spontane Imbibition $S_w$(sp) nach Gesamttrockenzeit [Tage] | | |
|---|---|---|
| 0,61 | 0,3 | 0,25 |

Die spontane Imbibition mit Salzwasser **Sw(sp)$_2$** nimmt bei den mit Organopolysiloxandispersion behandelten Kernen auch nach Lagerung bei hohen Temperaturen stark ab. Die kapillare Saugwirkung für Salzwasser unter Bedingungen, wie sie in Lagerstätten für Erdgas vorherrschen, wird stark herabgesetzt.

**Patentansprüche**

1.  Verfahren zur Austrocknung von immobiles Formationswasser enthaltendem Gestein im Einzugsradius von Erdgas- und Gasspeicherbohrungen, die weniger als 50 l Wasser pro 1000 m$^3$ (Vn) gefördertes Erdgas liefern, bei dem eine Dispersion, enthaltend die Komponenten

    A) Organosiliciumverbindung als wasserabweisender Wirkstoff,
    B) Wasser als Dispersionsmittel und gegebenenfalls
    C) Dispergens

     das Wasser enthaltende Gestein hydrophobiert.

2.  Verfahren nach Anspruch 1, bei dem die Organosiliciumverbindung (A) aus Einheiten der allgemeinen Formeln (I) bis (VII)

$$R_3SiO_{1/2} \qquad\qquad (I),$$

$$R_2SiO \qquad\qquad (II),$$

$$RSiO_{3/2} \qquad\qquad (III),$$

$$SiO_{4/2} \qquad\qquad (IV),$$

$$R_2(R'O)SiO_{1/2} \qquad\qquad (V),$$

$$R(R'O)SiO \qquad\qquad (VI),$$

$$R'OSiO_{3/2} \qquad\qquad (VII),$$

    aufgebaut ist, worin

    **R**    einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 18 Kohlenstoffatomen,
    **R'**   einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 30 Kohlenstoffatomen und Wasserstoffatome bedeuten.

3.  Verfahren nach Anspruch 1 oder 2, bei dem als Dispergentien (C) Sulfonate, Alkali- und Ammoniumsalze von Carbonsäuren Alkylpolyglycolether, Alkylarylpolyglycolether oder quarternäre Alkyl- und Alkylbenzylammoniumsalze eingesetzt werden.

4. Verfahren nach Anspruch 1 bis 3, bei dem auf 100 Gewichtsteile wasserabweisenden Wirkstoffs (A) 5 bis 150 Gewichtsteile Dispergens (C) eingesetzt werden.

**Claims**

1. Process for drying out immobile formation water in rock in the intake radius of natural gas wells and gas storage wells which deliver less than 50 l of water per 1000 m$^3$ (S.T.P.) of natural gas produced, in which a dispersion comprising the components

   A) an organosilicon compound as water-repellent active compound,
   B) water as dispersion medium, with or without
   C) a dispersant renders the water-containing rock hydrophobic.

2. Process according to Claim 1, in which the organosilicon compound (A) is made up of units of the general formulae (I) to (VII)

$$R_3SiO_{1/2} \qquad (I),$$

$$R_2SiO \qquad (II),$$

$$RSiO_{3/2} \qquad (III),$$

$$SiO_{4/2} \qquad (IV),$$

$$R_2(R'O)SiO_{1/2} \qquad (V),$$

$$R(R'O)SiO \qquad (VI),$$

$$R'OSiO_{3/2} \qquad (VII),$$

   where

   R    denotes monovalent hydrocarbon radicals having 1 to 18 carbon atoms, which are optionally substituted by halogen atoms, cyano, amino, alkylamino, quaternary ammonium, mercapto, epoxy, anhydrido, carboxylato, sulphonato, sulphato, phosphonato, isocyanato or polyoxyalkylene groups,
   R'   denotes monovalent hydrocarbon radicals having 1 to 30 carbon atoms and hydrogen atoms, which are optionally substituted by halogen atoms, cyano, amino, alkylamino, quaternary ammonium, mercapto, epoxy, anhydrido, carboxylato, sulphonato, sulphato, phosphonato, isocyanato or polyoxyalkylene groups.

3. Process according to Claim 1 or 2, in which sulphonates, alkali salts and ammonium salts of carboxylic acids, alkyl polyglycol ethers, alkylaryl polyglycol ethers or quaternary alkyl- and alkylbenzylammonium salts are used as dispersants (C).

4. Process according to Claim 1 to 3, in which 5 to 150 parts by weight of dispersant (C) are used per 100 parts by weight of water-repellent active compound (A) .

**Revendications**

1. Procédé d'assèchement d'une roche contenant de l'eau de formation immobile dans le rayon d'invasion de puits de gaz naturel et de puits de réserve de gaz qui produisent moins de 50 l d'eau pour 1000 m$^3$ (V.N.) de gaz naturel extrait, dans lequel une dispersion comprenant les composants

   A) un composé organosilicié en tant que substance active hydrofuge,
   B) de l'eau en tant que milieu de dispersion et éventuellement
   C) un dispersant,

   rend la roche contenant l'eau hydrophobe.

2. Procédé selon la revendication 1, dans lequel le composé organosilicié (A) est composé de motifs de formules générales (I) à (VII).

$$R_3SiO_{1/2} \qquad (I),$$

$$R_2SiO \qquad (II),$$

$$RSiO_{3/2} \qquad (III),$$

$$SiO_{4/2} \qquad (IV),$$

$$R_2(R'O)SiO_{1/2} \qquad (V),$$

$$R(R'O)SiO \qquad (VI),$$

$$R'OSiO_{3/2} \qquad (VII),$$

dans lesquelles

R représente des radicaux hydrocarbonés monovalents ayant de 1 à 18 atomes de carbone, éventuellement substitués par des atomes d'halogène, des groupes cyano, amino, alkylamino, ammonium quaternaire, mercapto, epoxy, anhydrido, carboxylato, sulphonato, sulphato, phosphonato, isocyanato ou polyoxyalkylène,

R' représente des radicaux hydrocarbonés monovalents ayant de 1 à 30 atomes de carbone et atomes d'hydrogène, éventuellement substitués par des atomes d'halogène, des groupes cyano, amino, alkylamino, ammonium quaternaire, mercapto, epoxy, anhydrido, carboxylato, sulphonato, sulphato, phosphonato, isocyanato ou polyoxyalkylène.

3. Procédé selon la revendication 1 ou 2, dans lequel on utilise, en tant que dispersants (C) des sulphonates, des sels de métaux alcalins et d'ammonium d'acides carboxyliques, des alkylpolyglycoléthers, des alkylarylpolyglycoléthers ou des sels d'alkyl- et d'alkylbenzylammonium quaternaires.

4. Procédé selon les revendications 1 à 3, dans lequel on utilise de 5 à 150 parties en poids de dispersant (C) pour 100 parties en poids de substance active hydrofuge (A).